Europäisches Patentamt

European Patent Office

Office européen des brevets

(11) Publication number: **0 467 477 A1**

# EUROPEAN PATENT APPLICATION

(21) Application number: 91201880.1

(22) Date of filing: 16.07.91

(51) Int. Cl.5: **A22C 29/02**, B65G 47/14, B65G 47/24

(30) Priority: 20.07.90 NL 9001665

(43) Date of publication of application:
22.01.92 Bulletin 92/04

(84) Designated Contracting States:
**AT BE CH DE DK ES FR GB GR IT LI LU NL SE**

(71) Applicant: **B.V. MACHINEFABRIEK B & S**
**A. Brücknerstraat 89**
**NL-7557 RP Hengelo(NL)**

(72) Inventor: **Muller, Hendrikus Gerhardus**
**Kersdijk 220**
**NL-7534 PG Enschede(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Device for feeding prawns to a prawn peeling machine.

(57) Device for feeding cooked, curved shrimps to the individually operating heads of a shrimp peeling machine, comprising:
a stepwise driven upgoing conveyor belt (2) in the bottom of a hopper (1) followed by a separating belt (3) moving in the same direction as belt (2), with above said belt (3) spaced apart slides (5) at an angle to the direction of movement and each guiding shrimps onto one of parallel belts (6) having each above them slides (7) with two parallel legs, which slides (7) move to and fro perpendicular to the direction of said belts (6), which belts (6) are followed by belts (10) having a higher speed and above them a timing element (12) with a recess (13) for only one well-shaped and curved shrimp, which belts (10) feed towards a roller (16) spaced from the end of the said belt (10) such that only shrimps with their curve forward pass through the gap (17) on a further belt (18) having folding means for laterally turning shrimps.

fig-1

The invention relates to a device for feeding cooked, and therefore curved, shrimps to the peeling heads of a shrimp peeling machine, comprising a device for segregating shrimps from a supply, a device for separating shrimps out of a quantity of shrimps from each other and dividing them into several narrow streams, a device for placing individual shrimps at a specific distance from each other, a device for feeding through one shrimp at the correct time and for discharging shrimps which are not curved properly, a device for placing the individual shrimps with the curve facing forward, viewed in the direction of conveyance, and a device for lateral turning round of the shrimps.

Such a device is known. This known device is composed of a number of successive complex and fragile mechanisms, and there is also a possibility of the shrimps in these devices being damaged through the multiple contacts with the moving parts, and then being unsuitable for further processing and causing breakdowns.

For example, the shrimps can be removed from the supply by means of a device which is described in Dutch Patent Specification 156,304, in which device the shrimp supply is situated in a trough-shaped net, the centre of which can be raised periodically so that a series of segregated shrimps remain lying on this centre. The shrimps are taken to an upgoing guide face by means of a number of brushes placed at a distance from each other. For this, and for further separation of the shrimps from each other, use can be made of a rotating mechanism which is described in Dutch Patent Specification 156,305, which deposits the isolated shrimp by means of a chute onto a discharge belt above which is situated a to and fro moving slide with two parallel walls which move periodically towards and away from each other, and which make a start on aligning the shrimps. There follows a device for removal of the undesired shrimps or parts of shrimps from the conveyor, which device is described in Dutch Patent Specification 156,307, the shrimps running into a V-shaped stop element which accommodates only a well-shaped, curved shrimp. This stop element is positioned above a conveyor belt, and a divided support face is fitted next to the conveyor belt. After a transverse stroke of the stop element to above the divided support face, when the swivellable part of the support face swings down the good shrimp will remain lying there, while the undesired shrimps fall away. Then comes a device for aligning shrimps in their lengthwise direction according to Dutch Patent Specification 156,306, which comprises two plates which can pivot downwards simultaneously and in opposite directions, about adjacent hinge pins placed transversely to the conveyor belt lying below. After a positioning slide has taken a shrimp into the centre on these two plates and the plates have swung down, the shrimp will fall curve first from the plate on which the curved part is lying onto the conveyor belt lying below.

There follows a device of the type described in Dutch Patent Specification 159,864, which is intended for turning round curved shrimps in the transverse direction. This device (see Figs. 9 to 13 of Dutch Patent Specification 159,864) comprises a divided support face disposed next to a conveyor belt, below the dividing line of which face two rotary rollers are placed. The part of the support face furthest away from the conveyor belt can be moved horizontally, at right angles to the running direction of the conveyor belt, so that after it has been moved a U-shaped groove with the two rotary rollers as the bottom is produced. When a shrimp is slid from the conveyor belt over the support face by means of a slide, and when the U-shaped groove is formed on passing of the dividing line, the shrimp will lie on its back in the U-shaped groove, and will be placed by the rotary rollers in a specific position in this U-shape and then slid by a finger out of this U-shaped groove onto a conveyor belt lying behind, and fed to a peeling device which processes the shrimps one by one and is described in Dutch Patent Specification 159,862. It emerges from the above-mentioned description that the shrimps come into contact with many moving parts in these supply and aligning mechanisms, and that the very fragile shrimps can consequently be damaged, while the complex device is also susceptible to faults.

The object of the invention is to provide a feed device which is considerably more simple and less susceptible to breakdowns, and in which the shrimps come into much less contact with moving parts than in the case of the known device.

This object is achieved according to the invention in that the device for segregating shrimps from a supply comprises a storage hopper with an upgoing conveyor belt as the bottom, which conveyor belt can be driven stepwise, through the fact that the device for separating shrimps from each other out of a quantity of shrimps and dividing them into several narrow streams comprises a conveyor belt which conveys in the same direction as the bottom belt of the storage hopper and connects to it, and slides are placed above said conveyor belt at an angle to the direction of movement of the belt, which slides are at a distance from each other which corresponds to the distance between the lower down conveyor belts above which slides with two parallel legs are placed, the legs being parallel to the direction of the conveyor and being movable to and fro at right angles thereto, in that the device for placing individual shrimps at a specific distance from each other comprises the transitions from the conveyor belts to conveyor belts connecting thereto, which conveyor belts have a higher belt speed than the preceding conveyor belts, in that the device above each belt for feeding through one shrimp per supply line at the correct time and for discharging shrimps which are not properly curved and those which are straight comprises elements which are rotatable about a vertical axis and have at least one recess which provides space for only a well-shaped and curved shrimp, which elements can be turned periodically through at least 180 degrees in each case, in order to direct the initially upstream directed aperture of the recess downstream, in that the device for placing individual shrimps with the curve facing forward, viewed in the direction of conveyance, comprises driven profiled rollers, at a distance from the end rollers of the conveyor belts and lying above the conveyor belts which follow, which distance is such that shrimps lying with the curve first fall directly with the curve downwards through the gaps formed by the clearance onto the conveyor belts, while the shrimps which are fed in head first do not fall with the light heads first through the gaps, but first find support on the profiled rollers and then fall with the heavier curve downward through the gaps onto the conveyor belts, in that the device for lateral turning round of shrimps comprises the guide rollers and the face guides, which guide rollers fold the belts locally into a V-shape, of which one leg is vertical, while the other leg lies at an angle. A sweeping mechanism is fitted above the end roller of the hopper bottom designed as a conveyor belt. The shrimps are placed by it in a layer thickness of one shrimp. A row of shrimps falls from the conveyor belt in the form of a hopper bottom onto the next conveyor belt. This row now lies at right angles to the running direction of the conveyor belt, and is then divided by slides into several narrow streams of shrimps. The slides are fitted at an angle relative to the running direction of the conveyor belt and preferably make a short to and fro movement at right angles to the running direction of the conveyor belt. These streams of shrimps are supplied to narrow conveyor belts (the number is equal to the number of peeling heads present in the machine). The narrow conveyor belts run at a higher speed and are also disposed lower down than the preceding broad conveyor belt. The falling causes the shrimps to be disentangled, and the higher belt speed ensures that the shrimps do not end up lying on top of each other. Placed above these narrow conveyor belts are slides which make a continuous to and fro movement at right angles to the running direction of the conveyor belts and position the shrimps in the centre on the conveyor belts, and the shrimps now lie after one another in their lengthwise direction on these conveyor belts. At the end these conveyor belts are provided with small rollers lying above the large rollers of the conveyor belts now following at, for example, eight times the belt speed. The shrimps are consequently placed a distance apart, so that they can now be treated individually. Placed above these conveyor belts are first positioning slides which position the shrimps relative to the inlet of the now following time mechanisms. These time mechanisms comprise disc-type elements with shafts, placed with the central axes at right angles to the conveyor belts and capable of rotating 180 degrees per unit time. Each disc has fitted in it at least one, but preferably two recesses rotated 180° relative to each other. These recesses are formed in such a way that they provide space for only one well-shaped, curved shrimp, while inadequately curved, straight and any second shrimps will not penetrate into the V-shaped recesses, or will penetrate less far. During the 180° turning of these time mechanisms the well-shaped, curved shrimps are supported in the recesses by the conveyor belts, and all shrimps which are not lying fully in the V-shaped recesses will fall off next to the conveyor belts and be discharged. After the 180- degree turn, the shrimps from the recesses of the time mechanisms will be conveyed by the conveyor belts below and will be placed by the positioning slides downstream of them on the centre of the conveyor belts again. At the end these conveyor belts are provided with small rollers, and placed at some distance from them are driven profiled rollers, of which the peripheral speed is equal to the belt speed of the conveyor belt before it. The clearances between the conveyor belts and the profiled rollers are larger than the thickness of a shrimp, but smaller than the length of a shrimp. Shrimps which are being conveyed on these conveyor belts and are lying with their curves facing forward will at the end of these conveyor belts fall directly over the small rollers through the gaps down onto conveyor belts below. The shrimps which are conveyed head first will rest with the much lighter heads first on the profiled rollers and will then fall curves first through the gaps onto the conveyor belts below. The distance between the profiled rollers and the conveyor belts below is smaller than the length of a shrimp. The shrimps are then collected by time flaps which per unit time admit one shrimp per flap, after which slides position the shrimps relative to the devices following them for lateral turning round of the shrimps.

These devices are produced by now providing the conveyor belts locally with folds. The cross-section of the fold is V-shaped, one leg standing vertical, while the other leg is at an angle. The shrimps are slid by the positioning slides onto the belt sections standing vertically in the folds. Shrimps which while passing through the V-shaped fold lie with the rear sides in the bottom of the V-shape and with the tail sides against the vertical belt sections will return to their original position on their exit from these V-shaped folds, due to the position of the centres of gravity. The shrimps which while passing through the V-shaped fold lie with the tail side in the bottom of the V-shape and with the rear sides against the vertical belt sections will tilt on their exit from these V-shaped folds, due to the position of the centres of gravity.

The individual shrimps, now all lying in one direction, are collected in time flaps and fed through per unit time to slides which slide the shrimps into the peeling heads.

The invention will now be explained in greater detail with reference to the drawings.

Fig. 1 is a top view of the device according to the invention.

Fig. 2 is a side view of the device according to the invention.

Figs. 3a and 3b are sections along the line III-III of Fig. 1.

Figs. 4a and 4b are longitudinal sections of the part of the device for placing individual shrimps curve first.

The device shown in the drawings comprises a storage hopper 1, with an upgoing conveyor belt 2 as the bottom, into which the mass of shrimps is emptied. The drive of the conveyor belt 2 is stepwise and a row of shrimps consequently falls on conveyor belt 3 per unit time, over the entire width of the machine. Fitted above the end roller of the conveyor belt 2 is a sweeping mechanism 4 for placing the shrimps in a layer thickness of one shrimp. The slides 5, fitted above the conveyor belt 3, are disposed at an angle relative to the running direction of the conveyor belt 3 and make a continuous short to and fro movement at right angles to the running direction of the conveyor belt 3.

The slides 5 divide the row of shrimps lying at right angles to the running direction of the conveyor belt 3 into several narrow streams of shrimps. Several lower down narrow conveyor belts 6 with a higher belt speed than conveyor belt 3 are then disposed at some distance from each other. During the fall of the shrimps from conveyor belt 3 onto the narrow conveyor belts 6 the shrimps are disentangled and do not come to rest on top of each other, due to the higher running speed of conveyor belts 6. Slides 7 with two parallel legs, which make a continuous to and fro movement at right angles to the running direction of the conveyor belts, are disposed above the conveyor belts 6. Through the action of these two-legged slides and the conveyance of the shrimps along the conveyor belts 6, the shrimps come to rest in the lengthwise direction in the centre of the conveyor belts 6. Conveyor belts 6 are provided at the end with reversing rollers 8 which have a smaller diameter and are situated above the shaft of the starting rollers 9 of conveyor belts 10. The belt speeds of conveyor belts 10 are approximately eight times the belt speeds of conveyor belts 6, and the shrimps are consequently placed greater distances apart, so that they can now be processed individually. The slides 11 at the start of the conveyor belts 10, which can make a to and fro movement at right angles to the running direction of the conveyor belts 10 position the shrimps relative to the inlet apertures of the time mechanisms 12. These time mechanisms 12 each have two V-shaped recesses 13 which are disposed turned 180 degrees relative to each other. However, these recesses 13 provide space for only one well-shaped shrimp. Inadequately curved, straight and any second shrimps will not penetrate into the V-shaped recesses, or will penetrate less far. The time mechanisms 12 are turned 180 degrees per unit time. The well-shaped, curved shrimps in the V-shaped recesses 13 are supported during the turning by the top faces of the conveyor belts 10. Shrimps not lying completely in the V-shaped recesses 13 are inadequately supported during the turning and will consequently fall off beside the belt and be discharged. The shrimps which are conveyed out of the V-shaped recesses 13 after the 180° turn of the time mechanisms 12 will then be placed again on the centre of the conveyor belts 10 by the slides 14 which make a to and fro movement at right angles to the running direction of the conveyor belts 10. The conveyor belts 10 are provided at the end with reversing rollers 15 which have a smaller diameter. Some distance behind that are the driven profiled rollers 16, which have a peripheral speed equal to the belt speed of the conveyor belts 10 and rotate in the same direction as the rollers 15. The clearances 17 between the conveyor belts 10 and the profiled rollers 16 are greater than the thickness, but smaller than the length of a shrimp, and the distance between the profiled rollers 16 and the conveyor belts 18 below them is smaller than the length of a shrimp.

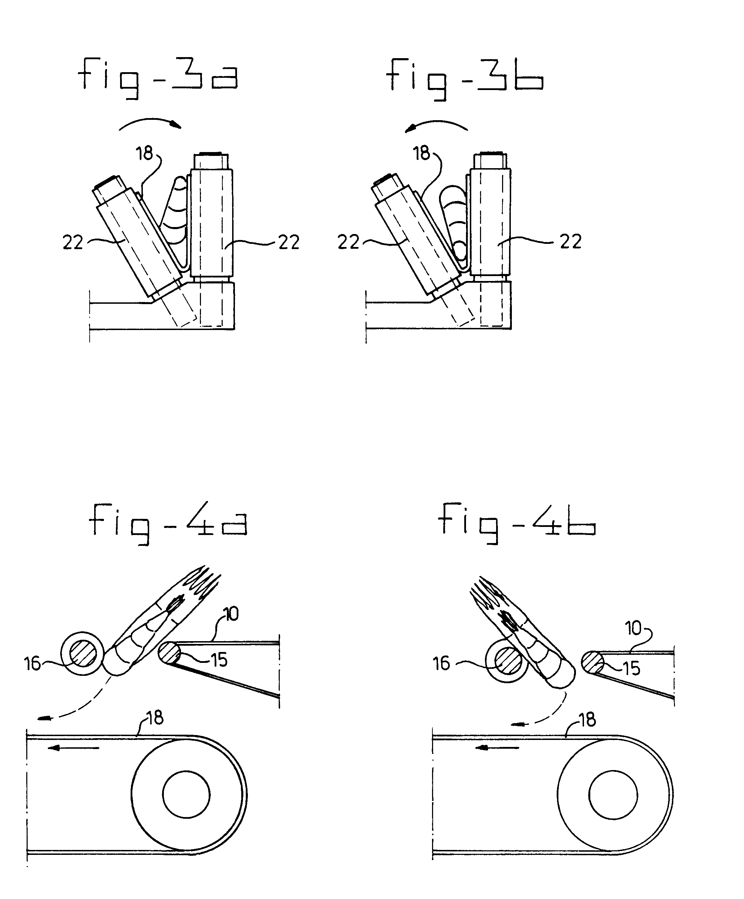

Due to the fact that in the case of shrimps the heads are always far lighter than the curved bodies, the shrimps which are fed in head first by the conveyor belts 10 do not fall head first through the gaps 17, but the heads of these shrimps will first be supported on the profiled rollers 16 and then fall with the heavier curves down through the gaps 17 onto the conveyor belts 18 below (see Fig. 4b).

Shrimps which are conveyed in by the conveyor belts 10 with the heavier curves forward will fall immediately with the curves down through the gaps 17 onto the conveyor belts 18 (see Fig. 4a).

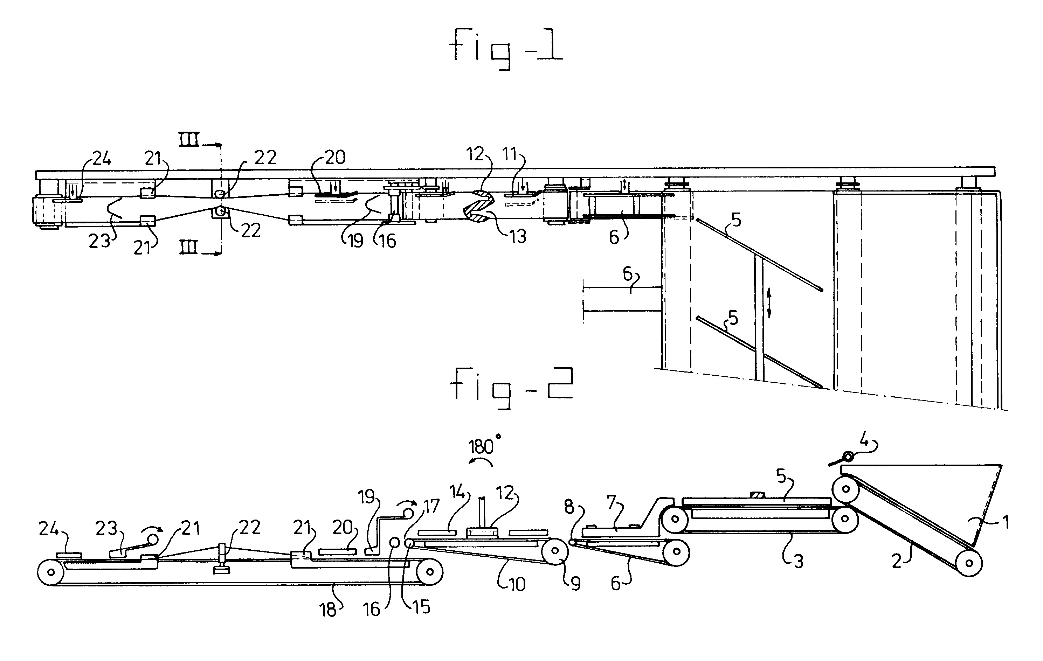

The time flaps 19 then collect the shrimps and admit one shrimp per flap per unit time. The slides 20 then position the shrimps relative to the devices now following for lateral turning round of shrimps. The top faces of the conveyor belts 18 are now folded locally by means of the guide rollers 22 and the face guides 21. The cross-sections of the folds in the conveyor belts 18 are a V-shape, one leg of which is vertical, while the other leg is at an angle (see Fig. 3). The shrimps can lie with the tail side to the left or right on the conveyor belts 18 for passing through the V-shaped folds. The shrimps must lie to the left as regards the feed to the peeling heads, in the embodiment shown in Fig. 1, all viewed from the running directions of the conveyor belts. The positioning slides 20, which can make a to and fro movement at right angles to the running direction of the conveyor belts 18, place the shrimps on the left sides of the conveyor belts, so that the rear sides or the tail sides lie in the centre of the conveyor belts 18. In the case of shrimps with the rear sides in the centre of the conveyor belts 18, when the V-shaped folds are being passed through they will lie with the rear sides in the bottom of the V-shape and with the tail sides against the vertical belt parts (see Fig. 3a). The position of their centres of gravity will cause these shrimps to return to their original position on leaving the V-shaped folds. Shrimps with the tail sides in the centre of the conveyor belts 18 will now lie with the tail sides in the bottom of the V-shape when passing through the V-shaped folds and with the rear sides against the vertical belt parts (see Fig. 3b).

The position of their centres of gravity will cause these shrimps to tilt in the V-shaped folds and leave the folds with the tails on the correct sides. Thereafter, all shrimps are collected in the time flaps 23 and fed through per unit time to the slides 24, which place them in the peeling heads.

**Claims**

1. Device for feeding cooked, and therefore curved, shrimps to the peeling heads of a shrimp peeling machine, comprising a device for segregating shrimps from a supply, a device for separating shrimps out of a quantity of shrimps from each other and dividing them into several narrow streams, a device for placing individual shrimps at a specific distance from each other, a device for feeding through one shrimp at the correct time and for discharging shrimps which are not curved properly, a device for placing the individual shrimps with the curve facing forward, viewed in the direction of conveyance, and a device for lateral turning round of shrimps, characterised in that

the device for segregating shrimps from a supply comprises a storage hopper (1) with an upgoing conveyor belt (2) as the bottom, which conveyor belt (2) can be driven stepwise;

the device for separating shrimps out of a quantity of shrimps from each other and dividing them into several narrow streams comprises a conveyor belt (3) which conveys in the same direction as the bottom belt (2) of the storage hopper and connects to it, and slides (5) are placed above said conveyor belt (3) at an angle to the direction of movement of the belt (3), which slides are at a distance from each other which corresponds to the distance between the lower down conveyor belts (6) above which slides (7) with two parallel legs are placed, the legs being parallel to the direction of the conveyor and being movable to and fro at right angles thereto;

the device for placing individual shrimps at a specific distance from each other comprises the transitions from the conveyor belts (6) to conveyor belts (10) connecting thereto, which conveyor belts (10) have a higher belt speed than the preceding conveyor belts (6);

the device above each belt (10) for feeding through one shrimp per supply line at the correct time and for discharging shrimps which are not properly curved and those which are straight comprises elements (12) which are rotatable about a vertical axis and have at least one recess (13) which provides space only for a well-shaped and curved shrimp, which elements (12) can be turned periodically through at least 180 degrees, in order to direct the initially upstream directed aperture of the recess (13) downstream;

the device for placing individual shrimps with the curve facing forward, viewed in the direction of conveyance, comprises driven profiled rollers (16), at a distance from the end rollers (15) of the conveyor belts (10) and lying above the conveyor belts (18) which follow, which distance is such that shrimps with the curve first fall directly with the curve downwards through the gaps formed by the clearance (17) onto the conveyor belt (18), while the shrimps which are supplied head first do not fall with the light heads forward through the gaps (17), but first find support on the profiled rollers (16) and then fall with the heavier curve downward through the gaps (17) onto the conveyor belts (18);

the device for lateral turning round of shrimps comprises the guide rollers (22) and the face guides (21), which guide rollers (22) fold the belts (18) locally into a V-shape, of which one leg is vertical, while the other leg lies at an angle.

2. Device according to Claim 1, characterised in that the slides (5) make a to and fro movement at right angles to the running direction of the conveyor belt (3).

3. Device according to Claim 1 or 2, characterised in that the two parallel legs of the slides (7) are at a distance from each other which corresponds to the length of a curved shrimp.

4. Device according to Claim 1, 2 or 3, characterised in that the clearances (17) between the profiled rollers (16) and the ends of the conveyor belts (10) are greater than the thickness of a shrimp and smaller than the length of a shrimp, while the clearances between the profiled rollers (16) and the top faces of the conveyor belts (18) lying below them are smaller than the length of a shrimp, and in that the peripheral speed of the profiled rollers (16) is equal to the belt speed of the conveyor belts (10).

5. Device according to Claim 1, 2, 3 or 4, characterised in that a sweeping mechanism (4) is fitted above the end reversing roller of the bottom conveyor (2) of the storage hopper (1), at a distance above said conveyor (2) which corresponds to the thickness of a shrimp.

# fig -1

# fig -2

EP 0 467 477 A1

fig-3a

fig-3b

Fig-4a

Fig-4b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | NL-C-82 322   (THE PEELERS COMPANY)<br>* column 5, line 4 - line 26 * * * column 6, line 15 - line 21; figures 1,3 * * <br>– – – | 1,5 | A 22 C 29/02<br>B 65 G 47/14<br>B 65 G 47/24 |
| A | NL-C-108 742   (L.C. SEP ET AL.)<br>* column 3, line 6 - column 4, line 4 * * * figure 4 * *<br>– – – | 1 | |
| A | NL-C-110 377   (L.C. SEP)<br>* column 1, line 30 - column 3, line 19; figures 1,2 * *<br>– – – | 1 | |
| A,D | NL-C-156 305   (N.V. MACHINEFABRIEK B. &S. BEDRIJVEN)<br>* page 2, line 21 - page 3, line 49 * * * figures 1-3 * *<br>– – – | 1 | |
| A | US-A-4 054 970   (S.J. METZGER ET AL.)<br>* column 11, line 21 - column 12, line 9; figures 6,7 * *<br>– – – | 1 | |
| A | DE-A-1 481 299   (HOMBAK MASCHINENFABRIK KG)<br>* page 1, line 15 - line 22; figure 1 * *<br>– – – – – | 1 | |

TECHNICAL FIELDS SEARCHED (Int. Cl.5)

A 22 C
B 65 G

The present search report has been drawn up for all claims

| Place of search | Date of completion of search | Examiner |
|---|---|---|
| The Hague | 23 September 91 | MARANGONI G. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document